# EUROPÄISCHE PATENTSCHRIFT

(11) **EP 1 352 193 B1**
(45) Veröffentlichungstag und Bekanntmachung des Hinweises auf die Patenterteilung: **05.10.2005**
(21) Anmeldenummer: 02700141.1
(22) Anmeldetag: 08.01.2002
(51) Int. Cl.: F16L 37/00

(54) **RAST-STECK-ANSCHLUSSEINRICHTUNG**
LOCKING PLUG-IN CONNECTION DEVICE
DISPOSITIF DE RACCORDEMENT ENFICHABLE ENCLIQUETABLE

(30) Priorität: 19.01.2001 DE 10102230
(43) Veröffentlichungstag der Anmeldung: 15.10.2003
(73) Patentinhaber: Eaton Fluid Power GmbH, 76532 Baden-Baden (DE)
(72) Erfinder: TWARDAWSKI, Harald, 76437 Rastatt (DE); LUFT, Thomas, 76185 Karlsruhe (DE); HALBROCK, Bernd, 75203 Königgsbach-Stein (DE); HUCK, Michael, Markus, 77830 Bühlertal (DE)
(74) Vertreter: Rüger, Barthelt & Abel Patentanwälte
(86) Internationale Anmeldenummer: PCT/DE2002/000024
(87) Internationale Veröffentlichungsnummer: WO 2002/057679

(56) Entgegenhaltungen:
- DE-A- 4 325 420
- DE-U- 8 424 892
- FR-A- 2 772 875
- US-A- 1 659 094

## Beschreibung

Die Erfindung betrifft eine Anschlusseinrichtung für fluidführende Einrichtungen, insbesondere zum Behälteranschluss.

Insbesondere in der Automobiltechnik ist es häufig gewünscht, Behälter oder sonstige Fluid führende Einrichtungen mit einem Anschluss zu versehen, um ein Rohr oder einen Schlauch oder eine anderweitige Leitung anzuschließen. Solche Anschlüsse müssen dauerhaft dicht und unempfindlich gegen mechanische und klimatische Einflüsse sein. Insbesondere müssen die Anschlüsse vibrationsfest sein. Darüber hinaus wird in der Regel eine einfache und sichere Montage gewünscht. Dabei sollen die Verbindungseinrichtungen meist zusätzlich sowohl zur maschinellen Montage als auch zur Handmontage eingerichtet sein, um einerseits bei der Fertigung des Kraftfahrzeugs eine schnelle und sichere Montage und andererseits später auch die Wartung zu ermöglichen, die meist von Hand durchgeführt wird.

In einigen Fällen wird darüber hinaus gewünscht, die Verbindung lösen zu können.

Aus der DE 198 27 708 A1 ist eine Anschlussvorrichtung für Flüssigkeitsleitungen an Pumpengehäusen bekannt. Zu der Anschlussvorrichtung gehört ein abgewinkeltes Rohrstück mit endseitig ausgebildeten Rastfingern. Die sich an die Rastfinger anschließende Außenumfangsfläche des Anschlussstücks trägt ein Dichtungselement, wie beispielsweise einen O-Ring. Zur Festlegung der Drehlage und zur Abstützung seitlicher Biegemomente, weist das Anschlussstück sich radial von ihm weg erstreckende Arme auf, die an ihrer dem Pumpengehäuse zugewandten Seite mit Zähnen versehen sind. Zwischen diesen Armen und dem Pumpengehäuse ist ein Zahnring vorgesehen, der, wenn das Rohrende in eine Öffnung des Pumpengehäuses eingesteckt ist, mit den Zähnen der Arme in Eingriff steht.

Darüber hinaus ist aus der FR 2772875 ein Anschlussstück aus elastischem Material bekannt. Das Anschlussstück ist rohrartig ausgebildet und weist ein wulstartig verdicktes, mit einem Versteifungsring versehenes Ende auf. In einem Abstand I zu dem wulstartig verdickten Ende ist ein kragenartiger Flansch vorgesehen. Ist das Anschlussstück in die Öffnung einer Behälterwand eingesetzt, ist diese zwischen der wulstartigen Verdickung und dem Flansch aufgenommen. Zur Befestigung des Anschlussstücks dient ein Rastring, der axial auf das Anschlussstück aufgeschoben wird und den flexiblen Flansch gegen die Behälterwand spannt.

Aus der DE 43 25 420 A1 ist eine Kabeldurchgangsvorrichtung zu Durchführung eines ummantelten Kabels durch eine Wandperforation bekannt. Die Kabeldurchgangsvorrichtung weist eine die Wandperforation durchsetzende Steckmuffe mit einer Durchgangsöffnung sowie ein Klemmelement zur peripheren Klemmung des Kabelmantels auf. Dazu gehört ein Expansionsdichtungsring der durch axiale Klemmung radial expandiert werden kann. Zur axialen Klemmung ist eine Klemmmutter vorgesehen, die, wenn sie angezogen wird, den Dichtungsring 17 axial komprimiert. Dieser bildet dann eine Dichtungswulst aus und expandiert dichtend gegen eine Innenkante der Wandperforation.

Diese Anschlusstechnik eignet sich nicht zum druckfesten Anschluss fluidführender Leitungen.

Davon ausgehend ist es Aufgabe der Erfindung, eine Anschlusseinrichtung für fluidführende Einrichtungen zu schaffen, die die schnelle Herstellung und Lösung einer sicheren und dichten Verbindung zwischen einem Leitungsende und einer fluidführenden Einrichtung, wie z.B. einem Behälter, gestattet.

Diese Aufgabe wird mit der Anschlusseinrichtung gemäß Anspruch 1 gelöst.

Die erfindungsgemäße Anschlusseinrichtung weist ein Kupplungsstück auf, das von einem Fluidkanal durchsetzt ist und mit einem Ende in eine Öffnung einer Fluid führenden Einrichtung einsteckbar ist. Das Ende des Kupplungsstücks ist mit einem Rastmittel versehen. Das Rastmittel ist so ausgebildet, dass es in oder hinter der Öffnung einrastet, in die das Kupplungsstück eingeschoben wird. Damit legt das Rastmittel die Axialposition des Kupplungsstücks in einer Richtung fest. Zur axial vollständigen Festlegung und Spannung des Rastmittels gegen ein entsprechendes Widerlager an der Fluid führenden Einrichtung dient dann eine Spanneinrichtung. Ein zwischen dem Rastmittel und der Spanneinrichtung angeordnetes Dichtungselement dient der Abdichtung des Kupplungsstücks gegen die Fluid führende Einrichtung.

Mit dieser Anschlusseinrichtung lässt sich ein Anschluss in einem zweischrittigen Vorgang herstellen, indem zunächst das Kupplungsstück in eine Öffnung eingerastet (eingesteckt) und dann die Spanneinrichtung festgezogen wird. Dadurch ist das Kupplungsstück an der fluidführenden Einrichtung, bspw. an einer Behälterwand, arretiert. Die Verbindung ist kippsicher und vibrationsfest. Das Dichtungselement ist axial eingespannt. Zur Herstellung der Verbindung ist keinerlei Schraub- oder Drehbewegung erforderlich.

Das Kupplungsstück kann einen rohrförmigen Grundkörper aufweisen, der an seinem Ende radial nach innen flexibel verformbar ist. Solche Verformbarkeit kann erreicht werden, indem ein- oder mehrere, z.B. streifenförmige und sich in Axialrichtung erstreckende, Bereiche seiner Wandung in Umfangsrichtung weniger steif sind, als die übrigen Wandungsabschnitte. Solche Bereiche können bspw. durch Längsschlitze oder durch streifenförmige Schwächungszonen oder eine Kombination aus beiden gebildet sein. Zwischen den Schlitzen oder Schwächungszonen sind dann fingerartige Wandungsabschnitte freigestellt, die flexibel sind und somit eine Federwirkung haben.

An den freien Enden solcher Finger können Rastvertiefungen oder Rastvorsprünge ausgebildet sein, die mit den flexiblen Wandungsbereichen des Kupplungsstücks Rastmittel bilden. Die Rastvorsprünge erstrecken sich radial von dem Kupplungsstück weg und weisen bspw. an ihrer in Einsteckrichtung vorn liegenden Seite eine Einführschräge und an ihrer in Einführrichtung hinten liegenden Seite eine Rast- oder Anlagefläche auf. Diese Rast- oder Anlagefläche ist vorzugsweise radial orientiert, so dass eine flächige Anlage zwischen der das Einsteckloch umgebenden Behälterwand und der Rast- oder Anlagefläche erreicht wird. Bedarfsweise kann die Rast- oder Anlagefläche auch in einem solchen Winkel gegen die Radialrichtung geneigt sein, dass mit der Behälterwand nur eine linienförmige Anlage zustande kommt. Jedenfalls aber wird es bei den meisten Ausführungsformen als vorteilhaft angesehen, den Durchmesser des Kupplungsstücks von dem rückseitigen Ende des Rastvorsprungs zu dem Kupplungsstück sprungartig zu reduzieren. Dies verhindert, dass das Kupplungsstück durch große Axialkräfte aus der Öffnung herausgezogen werden könnte.

Das Rastmittel wird, wenn es mit der Behälterwand verrastet ist, durch die Spanneinrichtung gegen diese gespannt. Zu der Spanneinrichtung gehört vorzugsweise ein an dem Kupplungsstück ausgebildetes Widerlager. In einer Ausführungsform der erfindungsgemäßen Anschlusseinrichtung ist die Spanneinrichtung als Keil-Spanneinrichtung ausgebildet. Das an dem Kupplungsstück vorgesehene Widerlager wird dann bspw. durch einen scheibenförmigen Flansch gebildet, an dem sich ein gerader oder bogenförmiger Keil abstützt. Dieser drückt direkt oder mittelbar über ein Zwischenstück gegen die Behälterwand und spannt somit das Rastmittel gegen die Behälterwand. Die Betätigungseinrichtung zur Erzeugung der Spannkraft ist quer zu der Axialrichtung gerichtet.

Die Keilelemente der Keil-Spanneinrichtung sind vorzugsweise asymmetrisch ausgebildet, d.h. die Stirnflächen (die in Axialrichtung weisenden oder schauenden Flächen) sind mit unterschiedlichen Winkeln gegen die Radialrichtung geneigt. Dies ermöglicht, insbesondere in Kombination mit einem Zwischenstück (Gegenhalterring) eine solche Gestaltung der Keil-Spanneinrichtung, dass abhängig von der Reihenfolge, in der das Keilelemente und das Zwischenstück auf dem Kupplungsstück angeordnet werden, eine größere oder eine geringere axiale Ausdehnung erreicht wird. Umgekehrt bedeutet dies, dass bei festgelegter axialer Länge des Kupplungsstückes die Keilelemente in einer ersten Anordnung radial weiter außen und bei Vertauschung der Reihenfolge von Keilelement und Zwischenstück radial weiter innen sitzen. Damit kann die Keil-Spanneinrichtung in einer ersten Anordnung zum Festspannen des Kupplungsstück an der Behälterwand und in einer zweiten Anordnung zum Lösen des Kupplungsstücks von der Behälterwand genutzt werden. Dies insbesondere dann, wenn das Keilelement in der zweiten Anordnung dazu dient, die Rastmittel des Kupplungsstücks außer Eingriff mit der Behälterwand zu bringen.

Dazu kann das Keilelement auch symmetrisch ausgebildet sein. Um unabhängig von der Symmetrie des Keilelements die Keil-Spanneinrichtung sowohl zum Festziehen als auch zum Lösen der Rastverbindung heranziehen zu können, ist es vorteilhaft, wenn an dem Widerlager, das bspw. als Ringflansch ausgebildet ist, eine Abstützfläche zur Abstützung des Keilelements und eine davon getrennte Anlagefläche (Schrägfläche für das Zwischenstück) aufweist. Die Abstützfläche und die Anlagefläche können unterschiedlich ausgerichtet und in unterschiedlichen Axialpositionen angeordnet sein. Dies ermöglicht die Ausbildung einer Tasche zur wenigstens teilweisen Aufnahme des zwischenstücks beim Lösevorgang, wenn das Keilelement unmittelbar bei der Behälterwand in den hier vorhandenen Spalt zwischen Zwischenstück und Behälterwand geschoben wird. Wird das Keilelement jedoch in den Spalt zwischen dem Zwischenstück und dem Widerlager geschoben, bleibt die Tasche frei. Die axiale Länge der Keil-Spannanordnung ist im erstgenannten Fall von dem Taschenboden (Anlagefläche) zu messen, während die axiale Länge der Keil-Spannordnung im zweiten Fall von der Abstützfläche des Widerlagers ausgehend zu messen ist. Während die Keil-Spannanordnung in letzterer Variante zum Festspannen der Verbindung dient, kann sie in der ersten Variante, bei der das Zwischenstück in die Tasche findet, zum Lösen der Rastverbindung dienen. Dies deshalb, weil sich die Keilelemente ohne Spannwirkung so weit radial nach innen drücken lassen, bis ihre Innenflächen auf die elastischen Finger des Rastmittels drücken und als Lösehilfe dienen.

Sowohl die Herstellung der Rastverbindung als auch die Lösung derselben gestaltet sich dadurch besonders einfach, jeweils durch Aufbringen einer Betätigungskraft quer zu dem Kupplungsstück der Verbindungseinrichtung. Es ist keinerlei Dreh- oder Schraubbewegung erforderlich. Entsprechend einfach sind die sich ergebenden Montage- oder Demontagevorgänge. Sie sind auch unter beengten Verhältnissen sicher und ohne Spezialwerkzeug durchzuführen. Die Montage kann sowohl von Hand als auch maschinell geschehen. Gleiches gilt für die Demontage.

Ein spezielles, zur Abdichtung der erfindungsgemäßen Anschlusseinrichtung geeignetes, Dichtungselement ist vorteilhafter Weise zweischenklig und weist einen scheibenförmigen Schenkel oder Abschnitt und einen rohr- oder ringförmigen Schenkel oder Abschnitt auf. Der scheibenförmige Abschnitt dient als Federmittel zur Sicherung der Linear-Spanneinrichtung sowie zusätzlich zur Abdichtung gegen die Außenseite der Behälterwand. Der ring- oder rohrförmige Abschnitt dient der Abdichtung gegen die Außenumfangsfläche des Kupplungsstücks. Diese Dichtwirkung erfolgt bspw. unter der Eigenspannung des Dichtungselements. Die Dichtwirkung kann gesichert oder verbessert werden, wenn das Dichtungselement an seiner Innenumfangsfläche mit einer Wulst oder Dichtlippe versehen ist.

Alternativ kann das Dichtungselement an dem Gegenhalterring angespritzt oder Teil desselben sein. Weiter ist es möglich, den Gegenhalterring mit einer konischen Innenfläche zu versehen, die den rohrförmigen Teil des Dichtungselements radial nach innen drückt.

Weitere Einzelheiten vorteilhafter Ausführungsformen der Erfindung ergeben sich aus der Zeichnung, der Beschreibung oder Unteransprüchen.

In der Zeichnung sind Ausführungsbeispiele der Erfindung veranschaulicht. Es zeigen:
Fig. 1 eine Anschlusseinrichtung in einer ersten Ausführungsform, in einer Explosionsdarstellung,
Fig. 2 die Anschlusseinrichtung nach Figur 1, in montiertem Zustand in längsgeschnittener Darstellung,
Fig. 3 die Anschlusseinrichtung nach Figur 1, beim Lösen der Steckverbindung, in längsgeschnittener Darstellung,
Fig. 4 eine erfindungsgemäße Anschlusseinrichtung in ihrer derzeit bevorzugten Ausführungsform, vor dem Spannen in einer teilweise geschnittenen Seitenansicht,
Fig. 5 die Anschlusseinrichtung nach Figur 4, in einer Vorderansicht,
Fig. 6 die Anschlusseinrichtung nach Figur 5, in montiertem Zustand, in teilweise geschnittener Seitenansicht,
Fig. 7 die Anschlusseinrichtung nach Figur 6, in Vorderansicht, und
Fig. 8 das Dichtungselement in einer vergrößerten, teilweise geschnittenen Ansicht.

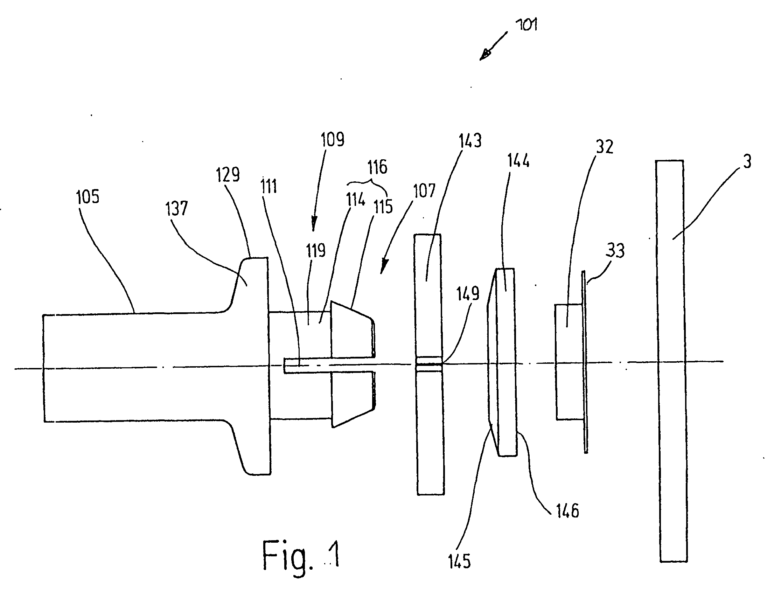

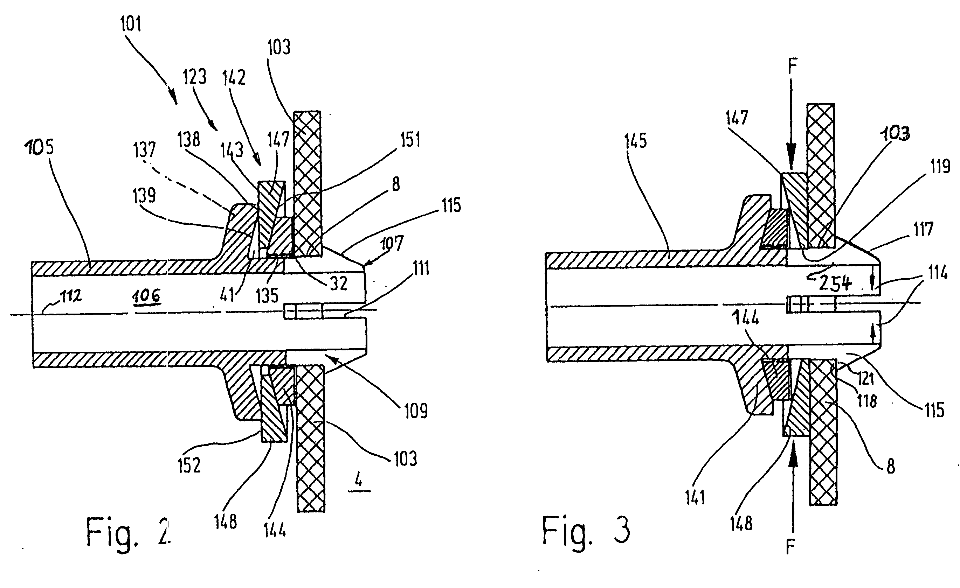

In Figur 1 ist eine Anschlusseinrichtung 101 zum Anschluss eines Leitungsendes an die Wand 3 eines Behälters 4 veranschaulicht. Die Anschlusseinrichtung 101 weist ein Kupplungsstück 105 auf, das im Wesentlichen rohrförmig ausgebildet ist und einen aus Figur 2 ersichtlichen Fluidkanal 106 definiert. Dieser mündet an einem Ende 107 des Kupplungsstücks 105, das in eine Öffnung 8 (Figur 2) der Wand 3 einzustecken ist.

An dem Kupplungsstück 105 ist endseitig ein Kopf 109 ausgebildet, der als Stecker dient. Im Bereich des in Figur 2 veranschaulichten Kopfs 109 ist das Kupplungsstück 105 mit, z.B. vier Längsschlitzen 111 versehen, die sich ausgehend von dem Ende 107 parallel zur Längsachse 112 des Kupplungsstücks 105 erstrecken.

Zwischen jeweils zwei Längsschlitzen 111 bildet die Wandung des Kupplungsstücks 105 einen freistehenden Finger 114 (Fig. 3), der entsprechend den Materialeigenschaften des Kupplungsstücks 105 etwas flexibel ist. Das Kupplungsstück 105 besteht vorzugsweise aus einem Kunststoff, so dass die Finger 114 federnde Zungen bilden. An dem Ende 107 sind die Finger 114 jeweils mit einem Rastvorsprung 115 versehen, mit dem sie jeweils gemeinsam ein Rastmittel 116 bilden. Der Rastvorsprung 115 weist, wie insbesondere aus Figur 3 ersichtlich wird, an seiner Außenseite eine konische Mantelfläche 117 auf. Er geht mit einer Stufe 118 abrupt in die zylindrische Außenfläche 119 des Kupplungsstücks 105 über. An der Stufe 118 ist eine vorzugsweise ringförmige plane Anlagefläche 121 ausgebildet, die dazu dient, mit der als Widerlager dienenden Wand 3 in flächige Anlage zu kommen, wie aus Figur 1 ersichtlich ist.

Die Längsschlitze 111 sind bezogen auf die durch die Längsachse 112 definierte Längsrichtung vorzugsweise länger ausgebildet als die Rastvorsprünge 115. Die Längsschlitze 111 überragen die Vorsprünge 115 höchstens um einen Betrag, der der Dicke der Wand 3 des Behälters 4 entspricht. Sollte sich damit keine ausreichende Flexibilität der Finger 114 erreichen lassen, kann die Anzahl der Längsschlitze 111 erhöht werden. Als alternative Maßnahme können sich an die Längsschlitze 111 Schwächungsbereiche anschließen, in denen die Dicke der Wandung des Kupplungsstücks 105 reduziert und somit eine Flexibilität in Umfangsrichtung herbeigeführt wird. Die Schwächungsbereiche können durch Vertiefungen gebildet sein, die von innen her in der Wandung des Kupplungsstücks 105 ausgebildet sind. Die Außenfläche 119 bleibt vorzugsweise zylindrisch, um die Abdichtung des Kupplungsstücks 105 gegen die Wand 3 nicht zu erschweren.

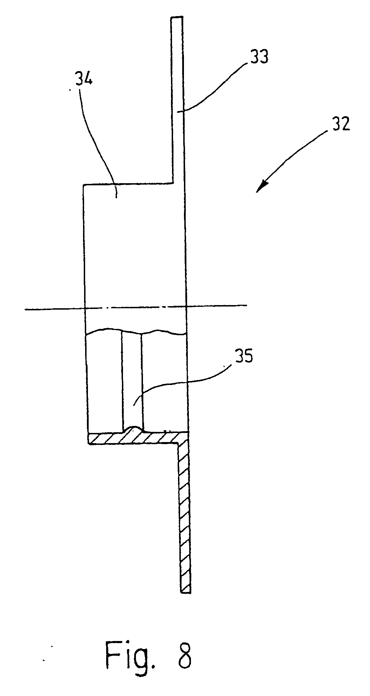

Zu der Anschlusseinrichtung 101 gehört ein Dichtungselement 32, das aus einem Elastomermaterial, bspw. Gummi, besteht. Es kann, wie in Figur 1 veranschaulicht, als eigenständiges Bauelement vorliegen. Das Dichtungselement 32 weist einen scheibenförmigen Abschnitt 33 auf, der zur Abdichtung gegen die Außenseite der Wand 3 eingerichtet ist. Von dem scheibenförmigen Abschnitt 33 erstreckt sich ein rohrstummelförmiger Abschnitt 34 weg (Fig. 8), dessen Innendurchmesser etwa dem Durchmesser der Außenfläche 119 entspricht. An der Innenseite des Abschnitts 34 ist, wie Figur 8 veranschaulicht, eine Dichtrippe 35 mit halbkreisförmigem Querschnitt oder anderweitiger Querschnittsgestalt vorgesehen. Alternativ kann eine Dichtlippe vorgesehen sein. Der Innendurchmesser der Dichtrippe 35 ist etwas geringer als der Durchmesser der Außenfläche 119, so dass die Dichtrippe 35 unter Vorspannung und somit abdichtend an der Außenfläche 119 anliegt.

Zur Herstellung der Verbindung zwischen der Anschlusseinrichtung 101 und dem Behälter 4 bei der Anschlusseinrichtung 101 ist eine Spanneinrichtung 123 vorgesehen, die als Keil-Spanneinrichtung ausgebildet ist. Das Kupplungsstück 105 weist als Widerlager 129 für die Spanneinrichtung 123 einen Ringflansch 137 auf, der einstückig an dem Kupplungsstück 105 angeformt sein kann. Der Ringflansch 137 ist an seiner der Wand 3 zugewandten Seite mit einer ringförmigen Abstützfläche 138 versehen, die als Planfläche an dem radial äußeren Rand des Ringflansch 137 ausgebildet und angeordnet sein kann. Im Anschluss an die Abstützfläche 138 kann die Stirnfläche des Ringflansch 137 in eine Schrägfläche 139 übergehen, um eine ringförmige Tasche 141 zu bilden.

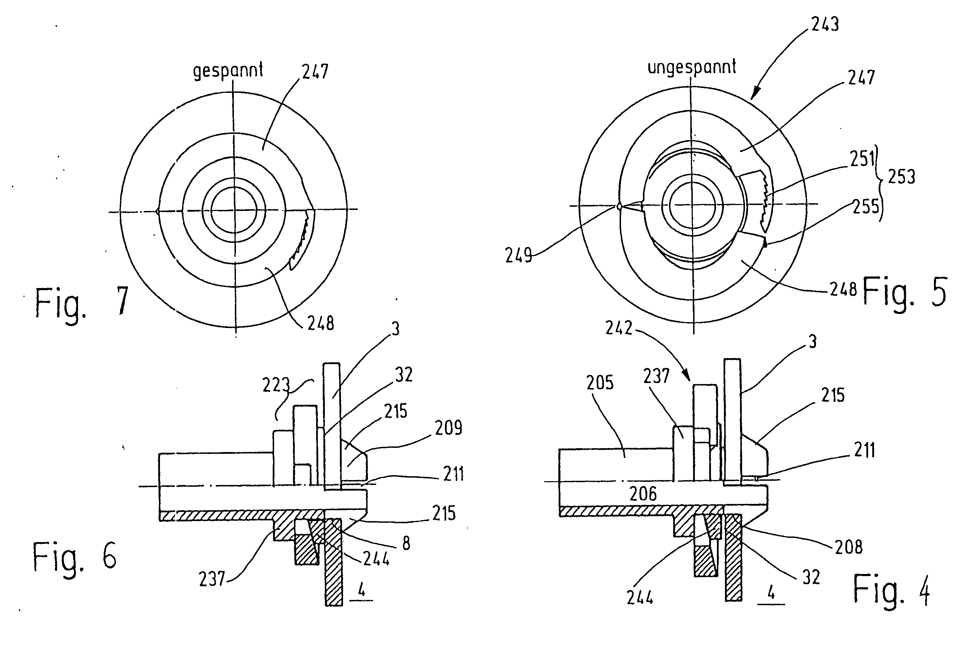

Zu der Spanneinrichtung 123 gehören eine Keilanordnung 143 und ein Gegenhalterring 144. Dieser ist auf der Außenfläche 119 des Kupplungsstücks 105 axial verschiebbar gelagert. Figur 4 veranschaulicht den Gegenhalterring 144 separat. Wie ersichtlich, weist er an seiner dem Ringflansch 137 zugewandten Seite eine Konusfläche 145 und an seiner gegenüberliegenden Seite eine ebene Ringfläche 146 auf.

Zu der Keilanordnung 143 gehören zwei bogenförmige Keilelemente 147, 148, die untereinander durch ein Filmscharnier 149 oder ein anderweitiges Scharnierelement verbunden sind.

Die Keilelemente 143 weisen an ihrer dem Gegenhalterring 144 zugewandten Seite eine als Keilfläche dienende Konusfläche 151 auf. An ihrer gegenüberliegenden Seite sind sie plan ausgebildet. Damit nimmt die axiale Dicke jedes Keilelements 147, 148 von einer radial äußeren Stelle zu einer radial inneren Stelle hin ab. Die Neigung der Konusfläche 151 stimmt dabei mit der Neigung der Konusfläche 145 überein.

Die insoweit beschriebene Anschlusseinrichtung 101 funktioniert folgendermaßen:

Zur Herstellung der Verbindung werden zunächst wenigstens der Gegenhalterring 144 und das Dichtungselement 32 auf den Kopf 109 geschoben. Dabei rastet der Kopf 109 an der Öffnung 8 ein, indem die Wandung der Öffnung 8, deren Durchmesser geringer ist als der Außendurchmesser des Kopfs 109, bei dem Einschiebevorgang die Finger 114 etwas zusammen drückt. Sobald die Vorsprünge 115 durch die Öffnung 8 hindurchgetreten sind, schnappen die Finger 114 wieder voneinander weg, so dass die Rastmittel 116 die Wand 3 hintergreifen.

Zum Festsetzen der Verbindung wird nun die Keilanordnung 143 eingesetzt. Dazu werden die Keilelemente 147, 148 so aufeinander zu geschwenkt, dass sie in den Zwischenraum eintreten, der zwischen dem Ringflansch 137 und dem Gegenhalterring 144 ausgebildet ist. Werden die Keilelemente 147, 148 fortgesetzt nach innen bewegt, treiben sie den Gegenhalterring 144 gegen das Dichtungselement 32 und die Wand 3. Dadurch wird die Anschlusseinrichtung 101 festgezogen. Ist dieser Zustand erreicht, können die Keilelemente 147, 148 in ihrer Position gesichert werden, bspw. durch ein geeignetes Sicherungsmittel. Dazu können Haft- oder Klebstoffe, formschlüssig wirkende Mittel, Klebeband, Spannband oder ähnliches dienen.

Wie aus Figur 2 weiter ersichtlich, kann die Anschlusseinrichtung 101 an Behältern mit unterschiedlich dicken Wänden 3 angewendet werden. Einzig wesentliches Kriterium ist zunächst, dass die Schlitze 111 die Dichtrippe 135 nicht überragen. Wanddickenunterschiede können ausgeglichen werden, indem die Keilelemente 147, 148 mehr oder weniger weit in den Spalt zwischen dem Ringflansch 137 und dem Gegenhalterring 144 eingetrieben werden.

Die hier beschriebene Anschlusseinrichtung 101 ist lösbar. Soll die Verbindung gelöst werden, werden zunächst die Keilelemente 147, 148 gelöst und nach außen geschwenkt, so dass sie abgenommen werden können. Im zweiten Schritt wird das Anschlussstück 105 in den Behälter 4 hineingeschoben, so dass die Wand 3 den Gegenhalterring 144 gegen den Ringflansch 137 schiebt. Der Gegenhalterring 144 findet dabei in die Tasche 141.

Im nächsten Schritt wird das Kupplungsstück 105 wieder etwas zurückgezogen, so dass sich ein Spalt zwischen dem Gegenhalterring 144 und der Wand 3 bildet. In diesen Spalt wird nun, wie Figur 3 veranschaulicht, die zwischenzeitlich gewendete Keilanordnung 143 eingesetzt. Der Gegenhalterring 144 ist zumindest teilweise von der Tasche 141 aufgenommen, so dass die Keilelemente 147, 148 nun in den Spalt zwischen dem Gegenhalterring 144 und der Wand 3 einfinden, ohne das Kupplungsstück 105 axial zu spannen. Dadurch können die Keilelemente 147, 148 so weit in den Spalt eingeschoben werden, dass ihre Innenumfangsflächen mit der Außenfläche 119 des Kopfs 109 in Berührung kommen. Durch Ausübung einer ausreichenden Kraft F (Pfeile in Figur 3) auf die Keilelemente 147, 148, können die Finger 114, wie in Figur 3 durch kleine Pfeile angedeutet, aufeinander zu bewegt werden. Die Rastvorsprünge 115 werden dadurch nach innen verlagert und geben die Öffnung 8 frei. Das Kupplungsstück 105 kann aus der Öffnung 8 herausgezogen werden.

Die Figuren 4 bis 7 veranschaulichen eine weiter abgewandelte Ausführungsform einer Anschlusseinrichtung 201. Soweit bau- oder funktionsmäßige Übereinstimmung mit der Ausführungsform nach den Figuren 1 bis 3 besteht, sind deren Bezugzeichen, erhöht um 100, verwendet. Zur Erläuterung wird entsprechend auf die vorstehenden Beschreibungsteile verwiesen.

Im Unterschied zu der Ausführungsform nach Figur 1 bis 3 weist die Anschlusseinrichtung 201 ein Anschlussstück 205 mit geradem Ringflansch 237 auf. Seine der Wand 3 des Behälters 4 zugewandte Seite ist plan ausgebildet. Die Keil-Spanneinrichtung 242 dient, wie bei dem vorstehend beschriebenen Ausführungsbeispiel, zum Festspannen der Anschlusseinrichtung 201. Wie Figur 5 veranschaulicht, sind die Keilelemente 247, 248 wiederum über ein Filmscharnier 239 miteinander verbunden. Zusätzlich ist zur Verbindung der Keilelemente 247, 248 miteinander eine Rasteinrichtung 253 vorgesehen, zu der ein Rastfinger 254 und eine Rastnase 255 gehören. Während der Rastfinger 254 an dem Keilelement 247 ausgebildet ist, ist die Rastnase 255 an dem bogenförmigen Keilelement 248 angeordnet. Der Rastfinger 254 ist an dem der Filmscharniereinrichtung 249 gegenüberliegenden Ende des Keilelements 247 angeordnet und erstreckt sich von diesem Ende in Umfangsrichtung weg. An seiner Innenseite ist der Rastfinger 254 mit einer Verzahnung versehen, die zu der Rastnase 255 passt. Eine solche Rasteinrichtung kann bedarfsweise auch an der Anschlusseinrichtung 101 vorgesehen werden.

Die in den Figuren 4 bis 7 veranschaulichte Anschlusseinrichtung 201 funktioniert wie folgt:

Nach Einstecken des Kopfs 209 in die Öffnung 8 wird der Gegenhalterring 244, wie in Figur 4 ersichtlich, gegen die Wand 3 geschoben. Es wird danach die Keilanordnung 243, wie aus Figur 8 ersichtlich, angesetzt und zwar so, dass die Keilelemente 247, 248 in den Spalt zwischen dem Gegenhalterring 244 und dem Ringflansch 237 fassen. Zum Festziehen der Anschlusseinrichtung 201 werden die Keilelemente 247, 248 nun aufeinander zu geschwenkt, wodurch sie letztendlich in die in den Figuren 9 und 10 veranschaulichte Position gelangen. Hierbei wird der Gegenhalterring 244 von dem Ringflansch 237 weg geschoben und die Wand 3 zwischen dem Gegenhalterring 244 und den Rastvorsprüngen 215 eingeklemmt. Zwischen dem Gegenhalterring 244 und der Wand 3 ist außerdem das Dichtungselement 32 geklemmt.

Die Keilelemente 247, 248 können, wenn bereits fester Sitz erreicht ist, in dieser Position verbleiben, bevor die Keilelemente 247, 248 mit ihren Enden aufeinander treffen. Im Idealfall wird jedoch die in Figur 6 und 7 veranschaulichte Position erreicht, in der die Anschlusseinrichtung 201 fest und kippsicher sitzt. Damit steht der Fluidkanal 206 in Fluidverbindung mit dem Innenraum des Behälters 4. Die Verbindung ist fluiddicht, vibrationsfest und dauerhaft sicher. Mit der Anschlusseinrichtung 101 bzw. 201 können Leitungen sowohl an Behälterwände als auch an Behälterböden angeschlossen werden. Soll mit der Anschlusseinrichtung, bspw. ein Bodenauslauf realisiert werden, ermöglichen die Schlitze 111 211 ein vollständiges Ablaufen von in dem Behälter 4 gehaltener Flüssigkeit über die Anschlusseinrichtung, obwohl der Kopf 109 bzw. 209 etwas in den Innenraum des Behälters 4 ragt.

Die erfindungsgemäße Anschlusseinrichtung 101, 201 weist einen Rastkopf 109, 209 auf, der mit einer Öffnung 8 einer Wand 3 verrastbar ist. An dem betreffenden Kupplungsstück 5 ist außerdem eine Spanneinrichtung 123, 223 vorgesehen, die dazu dient, den mit der Wand 3 verrasteten Kopf 109, 209 ohne Zuhilfenahme einer Drehbewegung gegen die Wand 3 zu spannen. Die Spanneinrichtung 123, 223 kann als Keil-Spanneinrichtung 142, 242 ausgebildet sein. Letzteres gestattet die Erzeugung großer Spannkräfte mit kleinen Betätigungskräften. Die Spanneinrichtung 142, 242 ist vorzugsweise durch eine Rasteinrichtung 253 gesichert, wodurch bei einfacher Montage eine vibrationsfeste und temperaturwechselbeständige Verbindung erreicht wird.

## Patentansprüche

1. Anschlusseinrichtung (101, 201) für Fluid führende Einrichtungen (4),
mit einem Kupplungsstück (105, 205), das einen Fluidkanal (106, 206) aufweist, der an einem Ende (107, 207) des Kupplungsstücks (105, 205) mündet, und das an diesem Ende (107, 207) ein Rastmittel (116, 216) aufweist,
mit einer Spanneinrichtung (123, 223), die dazu eingerichtet ist, das Rastmittel (116, 216) in einer Axialrichtung gegen eine Wand (3) zu spannen,
mit einem Dichtungselement (32) zur Abdichtung des Fluidkanals (106, 206) gegen die Wand (3)
**dadurch gekennzeichnet, dass**
zu der Spanneinrichtung (123, 223) ein Gegenhalterring (144) und eine Keil-Spanneinrichtung (142, 242) mit zwei Keilelementen (147, 148, 247, 248) gehören, die zwischen einen Vorsprung und die Wand (3) einführbar sind, an die die Anschlusseinrichtung (101, 201) anzuschließen ist,
wobei abhängig von der Reihenfolge, in der die Keilelemente (147, 148, 247, 248) und der Gegenhalterring (144) auf dem Kupplungsstück (105, 205) angeordnet werden, die Keil-Spanneinrichtung (142, 242) in einer ersten Anordnung radial weiter außen und in einer zweiten Anordnung radial weiter innen sitzt, so dass die Keil-Spanneinrichtung (142, 242) in der zweiten Anordnung dazu dienen kann, die Rastmittel (116, 216) des Kupplungsstücks (105, 205) in und außer Eingriff mit der Wand (3) zu bringen.

2. Anschlusseinrichtung nach Anspruch 1, **dadurch gekennzeichnet, dass** das Kupplungsstück (5, 105, 205) einen rohrförmigen Grundkörper aufweist, der an seinem Ende (107, 207) radial nach innen flexibel verformbar ist.

3. Anschlusseinrichtung nach Anspruch 2, **dadurch gekennzeichnet, dass** der Grundkörper an seinem Ende (107, 207) mit wenigstens einem Längs-Schlitz (111, 211) versehen ist.

4. Anschlusseinrichtung nach Anspruch 3, **dadurch gekennzeichnet, dass** der Längs-Schlitz (111, 211) eine Länge aufweist, die größer ist als die Länge von Rastvorsprüngen (115, 215), die zu dem Rastmittel (116, 216) gehören.

5. Anschlusseinrichtung nach Anspruch 1, **dadurch gekennzeichnet, dass** der Grundkörper mit wenigstens einem Schwächungsbereich versehen ist, der in Umfangsrichtung eine geringere Steifigkeit aufweist, als sich anschließende, an den Schwächungsbereich angrenzende Wandbereiche des Kupplungsstücks (105, 205).

6. Anschlusseinrichtung nach Anspruch 1, **dadurch gekennzeichnet, dass** zu dem Rastmittel (116, 216) an dem Ende (107, 207) des Kupplungsstücks (105, 205) angeordnete Rastvorsprünge (115, 215) gehören, die sich radial von dem Kupplungsstück (105, 205) weg erstrecken.

7. Anschlusseinrichtung nach Anspruch 3, **dadurch gekennzeichnet, dass** die Rastvorsprünge (115, 215) eine Außenseite (117, 217) aufweisen, die eine Konusfläche festlegen.

8. Anschlusseinrichtung nach Anspruch 1, **dadurch gekennzeichnet, dass** die Rastvorsprünge (115, 215) eine Anlagefläche (121, 221) aufweisen, die sich von der Außenfläche (119, 219) des Kupplungsstücks (105, 205) ausgehend in Radialrichtung erstreckt.

9. Anschlusseinrichtung nach Anspruch 1, **dadurch gekennzeichnet, dass** zu der Spanneinrichtung (123, 223) ein an dem Kupplungsstück (105, 205) vorgesehenes Widerlager (129, 229) gehört, das durch einen Absatz gebildet ist.

10. Anschlusseinrichtung nach Anspruch 9, **dadurch gekennzeichnet, dass** der Absatz (137) an einem Ringflansch (137) ausgebildet ist und dass die Spanneinrichtung (123, 223) zwischen den Ringflansch (137, 237) und die Wand (3) einführbar ist, an die die Anschlusseinrichtung (101, 201) anzuschließen ist.

11. Anschlusseinrichtung nach Anspruch 1, **dadurch gekennzeichnet, dass** Keilelemente (147, 148, 247, 248) bogenförmig ausgebildet und über ein Scharniermittel (149, 249) miteinander verbunden sind.

12. Anschlusseinrichtung nach Anspruch 2, **dadurch gekennzeichnet, dass** die bogenförmigen Keilelemente (247, 248) über eine Rasteinrichtung (253) miteinander verbindbar sind.

13. Anschlusseinrichtung nach Anspruch 1, **dadurch gekennzeichnet, dass** die Keilflächen (151, 251) Konusflächen sind.

14. Anschlusseinrichtung nach Anspruch 1, **dadurch gekennzeichnet, dass** zu der Spanneinrichtung (142, 242) ein Gegenhalterring (144, 244) gehört, der auf dem Kupplungsstück (5) verschiebbar gelagert ist.

15. Anschlusseinrichtung nach Anspruch 1, **dadurch gekennzeichnet, dass** das Dichtungselement (32) als geschlossener Ring aus elastomerem Material ausgebildet ist.

16. Anschlusseinrichtung nach Anspruch 1, **dadurch gekennzeichnet, dass** das Dichtungselement (32) einen Scheibenabschnitt (33) und eine Rohrabschnitt (34) aufweist.

17. Anschlusseinrichtung nach Anspruch 16, **dadurch gekennzeichnet, dass** der Rohrabschnitt (34) an seiner Innenumfangsfläche eine Rippe (35) aufweist.

## Claims

1. Connection device (101, 201) for fluid-conducting equipment (4),
with a coupling piece (105, 205), which has a fluid channel (106, 206) that discharges on o ne e nd (107, 207) of the coupling piece (105, 205) and has a locking device (116, 216) on this end (107, 207),
with a clamping device (123, 223), set up to clamp the locking device (116, 216) against an wall (3) in an axial direction,
with a sealing element (32) for sealing the fluid channel (106, 206) against the wall (3),
**characterised in that**
the clamping device (123, 223) comprises a retaining ring (144) and a wedge-clamping device (142, 242) with two wedge elements (147, 148, 247, 248) that can be introduced between a protrusion and the wall (3) to which the connection device (101, 201) is to be connected,
whereby, depending upon the sequence in which the wedge elements (147, 148, 247, 248) and the retaining ring (144) are arranged on the coupling piece (105, 205), the wedge-clamping device (142, 242) in a first arrangement sits radially further out and in a second arrangement sits radially further in, so that the wedge-clamping device (142, 242) in the second arrangement can serve to bring the locking device (116, 216) of the coupling piece (105, 205) into and out of engagement with the wall (3).

2. Connection device according to claim 1, **characterised in that** the coupling piece (5, 105, 205) has a tubular base element that is flexibly deformable radially inward on its end (107, 207).

3. Connection device according to claim 2, **characterised in that** the base element is provided on its end (107, 207) with at least one longitudinal slit (111, 211).

4. Connection device according to claim 3, **characterised in that** the longitudinal slit (111, 211) has a length greater than the length of the locking protrusions (115, 215) belonging to the locking device (116, 216).

5. Connection device according to claim 1, **characterised in that** the base element is provided with at least one weakening region that has lower rigidity in the peripheral direction than the wall regions of the coupling piece (105, 205) adjacent to the weakening region.

6. Connection device according to claim 1, **characterised in that** the locking device (116, 216) on the end (107, 207) of coupling piece (105, 205) has locking protrusions (115, 215) that extend radially away from coupling piece (105, 205).

7. Connection device according to claim 3, **characterised in that** the locking protrusions (115, 215) have an outside (117, 217) that establishes a conical surface.

8. Connection device according to claim 1, **characterised in that** the locking protrusions (115, 215) h ave a supports urface (121, 221) t hat extends from the outer surface (119, 219) of the coupling piece (105, 205) in the radial direction.

9. Connection device according to claim 1, **characterised in that** the clamping device (123, 223) comprises an abutment (129, 229) provided on the coupling piece (105, 205), which is formed by a shoulder.

10. Connection device according to claim 9, **characterised in that** the shoulder (137) is formed on a ring flange (137) and that the clamping device (123, 223) can be introduced between the ring flange (127, 237) and the wall (3) to which the connection device (101, 201) is to be connected.

11. Connection device according to claim 1, **characterised in that** the wedge elements (147, 148, 247, 248) have an arc-like design and are connected to each other via a hinge device (149, 249).

12. Connection device according to claim 2, **characterised in that** the arc-like wedge elements (247, 248) can be connected to each other via a locking device (253).

13. Connection device according to claim 1, **characterised in that** the wedge surfaces (151, 251) are conical surfaces.

14. Connection device according to claim 1, **characterised in that** the clamping device (142, 242) includes a retaining ring (144, 244) that is mounted displaceably on the coupling piece (5).

15. Connection device according to claim 1, **characterised in that** the sealing element (32) is designed as a closed ring made of elastomer material.

16. Connection device according to claim 1, **characterised in that** the sealing element has a disk section (33) and a tube section (34).

17. Connection device according to claim 16, **characterised in that** the tube section (34) has a rib (35) on its inside periphery.

## Revendications

1. Dispositif de raccordement (101,201), pour des équipements (4) guidant un fluide,
avec une pièce d'accouplement (105,205), présentant un canal à fluide (106,0206), débouchant à une extrémité (107,207) de la pièce d'accouplement (105,205) et présentant, à cette extrémité (107,207), un moyen d'accouplement (116,216),
avec un dispositif de serrage (123,223), agencé pour serrer les moyens d'encliquetage (116,216) en une direction axiale, contre une paroi (3),
avec un élément d'étanchéité (32) pour isoler hermétiquement le canal à fluide (106,206) contre la paroi (3),
**caractérisé en ce qu'**
appartiennent au dispositif de serrage (123,223) une bague de support conjugué (144) et un dispositif de serrage à effet de coin (142,242), comprenant deux éléments formant coin (147,148, 247, 248) susceptibles d'être introduit entre une saillie et la paroi (3) à laquelle le dispositif de raccordement (101,201) doit être raccordé,
où, en fonction de l'ordre de succession dans lequel les éléments formant coin (147,148,247,248) et la bague de maintien conjugué (144) sont disposés sur la pièce d'accouplement (105,205), le dispositif de serrage à points (142,242) est placé en un premier agencement, radialement plus à l'extérieur, et en un deuxième agencement, radialement plus à l'intérieur, de manière que le dispositif de serrage de coin (142,242), dans le deuxième agencement, puisse servir à placer les moyens d'encliquetage (116,216) des pièces d'accouplement (105,205) en et hors de prise avec la paroi (3).

2. Dispositif de raccordement selon la revendication 1, **caractérisé en ce que** la pièce de raccordement (505,205) présente un corps de base à forme tubulaire, déformable de façon flexible radialement vers l'intérieur, à son extrémité (107,207).

3. Dispositif de raccordement selon la revendication 2, **caractérisé en ce que** le corps de base est muni, sur son extrémité (107,207), d'au moins une fente longitudinale (111,211).

4. Dispositif de raccordement selon la revendication 3, **caractérisé en ce que** la fente longitudinale (111,211) présente une longueur supérieure à la longueur de saillies d'encliquetage (115,215), appartenant au moyen d'encliquetage (116,216).

5. Dispositif de raccordement selon la revendication 1, **caractérisé en ce que** le corps de base est muni d'au moins une zone d'affaiblissement, présentant, en direction périphérique une rigidité, inférieure à celle des zones de parois se raccordant, limitrophes à la zone d'affaiblissement, de la pièce d'accouplement (105,205).

6. Dispositif de raccordement selon la revendication 1, **caractérisé en ce qu'**appartiennent au moyens d'encliquetage (116,216) des saillies d'encliquetage (115,215), disposées à une extrémité (107,207) de la pièce d'accouplement (105,205) et s'étendant en s'écartant radialement de la pièce d'accouplement (105,205).

7. Dispositif de raccordement selon la revendication 3, **caractérisé en ce que** les saillies d'encliquetage (115,215) présentent une face extérieure (117,217), définissant une face conique.

8. Dispositif de raccordement selon la revendication 1, **caractérisé en ce que** les saillies d'encliquetage (115,215) présentent une face d'appui (121,221) s'étendant en direction radiale, en partant de la face extérieure (119,219) de la pièce d'accouplement (105,205).

9. Dispositif de raccordement selon la revendication 1, **caractérisé en ce qu'**appartient au dispositif de serrage (123,223) un contre-palier (129,229), prévu sur la pièce d'accouplement (105,205) et formé par un décrochement.

10. Dispositif de raccordement selon la revendication 9, **caractérisé en ce que** le décrochement (137) est réalisé sur une bride annulaire (137), et **en ce que** le dispositif de serrage (123,223) est susceptible d'être introduit entre la bride annulaire (137,237) et la paroi (3), sur laquelle le dispositif de raccordement (101,201) doit être raccordé.

11. Dispositif de raccordement selon la revendication 1, **caractérisé en ce que** des éléments formant coin (147,148,247,248) sont conformés en arc et reliés ensemble par un moyen formant charnière (149,249).

12. Dispositif de raccordement selon la revendication 2, **caractérisé en ce que** les éléments formant coin (247,248) à forme arquée sont susceptibles d'être reliés ensemble par un dispositif d'encliquetage (253).

13. Dispositif de raccordement selon la revendication 1, **caractérisé en ce que** les faces de coin (151,251) sont des faces coniques.

14. Dispositif de raccordement selon la revendication 1, **caractérisé en ce qu'**appartient au dispositif de serrage (142,242) une bague de maintien conjugué (144,244), montée de façon déplaçable sur la pièce d'accouplement (5).

15. Dispositif de raccordement selon la revendication 1, **caractérisé en ce que** l'élément d'étanchéité (32) est réalisé sous forme de bague fermée, en matériau élastomère.

16. Dispositif de raccordement selon la revendication 1, **caractérisé en ce que** l'élément d'étanchéité (32) présente un tronçon discoïde (33) et un tronçon tubulaire (34).

17. Dispositif de raccordement selon la revendication 16, **caractérisé en ce que** le tronçon tubulaire (34) présente une nervure (35) sur sa surface périphérique intérieure.
